# EUROPÄISCHE PATENTSCHRIFT

(11) **EP 3 277 479 B1**
(45) Veröffentlichungstag und Bekanntmachung des Hinweises auf die Patenterteilung: **09.06.2021**
(21) Anmeldenummer: 15720599.8
(22) Anmeldetag: 30.04.2015
(51) Int. Cl.: B29C 49/12, B29C 49/58, B29C 49/06

(54) **VORRICHTUNG ZUR BLASFORMUNG VON BEHÄLTERN**
DEVICE FOR BLOW MOULDING CONTAINERS
DISPOSITIF DE MOULAGE PAR SOUFFLAGE DE CONTENANTS

(43) Veröffentlichungstag der Anmeldung: 07.02.2018
(73) Patentinhaber: KHS Corpoplast GmbH, 22145 Hamburg (DE)
(72) Erfinder: LINKE, Michael, 22159 Hamburg (DE); BAUMGARTE, Rolf, 22926 Ahrensburg (DE); LITZENBERG, Michael, 21039 Börnsen (DE); LEWIN, Frank, 22889 Tangstedt (DE); KIEFER, Margit, 22119 Hamburg (DE)
(74) Vertreter: Eisenführ Speiser
(86) Internationale Anmeldenummer: PCT/EP2015/000892
(87) Internationale Veröffentlichungsnummer: WO 2016/173607

(56) Entgegenhaltungen:
- DE-B3-102008 064 770
- JP-A- 2000 043 131
- US-A1- 2010 252 945
- US-A1- 2011 241 265
- US-A1- 2012 207 872

## Beschreibung

Die Erfindung betrifft eine Vorrichtung zur Blasformung von Behältern aus einem thermoplastischen Material, aufweisend eine Reckstange zur Reckung des Vorformlings, eine Blasdüse zur Zufuhr eines Blasgases in den Vorformling und für den Aufbau des für die Vorformlingexpansion erforderlichen Blasdruckes, sowie Kopplungsmittel für die Kopplung von Blasdüse und Reckstange zur Erzielung einer abgestimmten Bewegungskinematik.

Vorrichtungen gemäß dem Stand der Technik sind in den Patentschriften DE102008064770B3, US2012/207872A1, US2010/252945A1 und US2011/241265A1 beschrieben.

Die Vorrichtung zur Blasformung von Behältern aus einem thermoplastischen Material ist Bestandteil einer mit einer Blasform versehene Blasstation und weist eine Reckstange zur Beaufschlagung eines in die Blasform einsetzbaren Vorformlings auf. Die Reckstange ist über Kopplungsmittel und ggf. Trennmittel mit einem Linearantrieb verbunden. Die Blasstation weist eine positionierbare Blasgaszuführung auf.

Bei einer Behälterformung durch Blasdruckeinwirkung werden Vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird.

Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert. Die einleitend erwähnte Einbringung des unter Druck stehenden Gases umfasst auch die Druckgaseinleitung in die sich entwickelnde Behälterblase sowie die Druckgaseinleitung in den Vorformling zu Beginn des Blasvorganges.

Der grundsätzliche Aufbau einer Blasstation zur Behälterformung wird in der DE-OS 42 12 583 beschrieben. Möglichkeiten zur Temperierung der Vorformlinge werden in der DE-OS 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des Vorformlings einführbar sind, gehören ebenfalls zu den verfügbaren Konstruktionen.

Eine Handhabung von Behältern unter Verwendung von Übergaberädern wird beispielsweise in der DE-OS 199 06 438 bei einer Anordnung des Übergaberades zwischen einem Blasrad und einer Ausgabestrecke beschrieben.

Die bereits erläuterte Handhabung der Vorformlinge erfolgt zum einen bei den sogenannten Zweistufenverfahren, bei denen die Vorformlinge zunächst in einem Spritzgussverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgusstechischen Herstellung und einer ausreichenden Verfestigung geeignet temperiert und anschließend aufgeblasen werden.

Das bedeutet, dass die Vorformlinge entweder aus der ersten Hitze heraus blasgeformt oder separat temperaturkonditioniert und anschließend blasgeformt werden. Diese Zusammenhänge werden in der DE 10 2007 009 026 A1 beschrieben.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Die Durchführung der Bewegungskoordinierung der Reckstange kann nach unterschiedlichen Prinzipien erfolgen. Bekannt ist es beispielsweise, die Reckstange unter Verwendung von Kurvenrollen zu positionieren, die entlang von Kurvenbahnen geführt sind. Eine besonders hohe Genauigkeit und Reproduzierbarkeit des Reckvorganges lässt sich bei derartigen Kurvensteuerungen realisieren, wenn die Kurvenrollen zweiseitig geführt sind und hierdurch einer exakt definierten Bahn folgen. Derartige Kurvensteuerungen weisen aber den Nachteil auf, dass schwere und räumlich groß dimensionierte Kurvenbahnen verwendet werden müssen, die in der Regel aus Stahl gefertigt sind. Eine Umrüstung des Recksystems zur Durchführung abgeänderter Reckbewegungen verursacht einen hohen Aufwand.

Es sind ebenfalls Kurvensteuerungen bekannt, bei denen die Kurvenrollen lediglich einseitig geführt werden und unter Verwendung von Pneumatikzylindern gegen die einseitige Führungsbahn gedrückt werden. Es liegt hier zwar eine vereinfachte und somit preiswertere und leichtere Konstruktion vor, in Abhängigkeit von den auftretenden Reckkräften kann die Kurvenrolle aber entgegen der belastenden pneumatischen Spannkraft von der Kurvenbahn abheben und der Reckvorgang verlässt hierdurch die vorgegebene Prozesscharakteristik. Hieraus resultiert eine verschlechterte Qualität der geblasenen Behälter.

Sehr genaue Recksysteme können unter Verwendung von elektrischen Linearmotoren bereitgestellt werden. Linearmotoren der erforderlichen Leistungsstärke sind derzeit jedoch noch sehr teuer und beanspruchen darüber hinaus einen großen Bauraum.

Bekannt geworden sind ebenfalls bereits reine pneumatische Recksysteme sowie Hybridsysteme, bei denen sowohl pneumatische Antriebe als auch Linearmotoren zum Einsatz kommen.

Für die positionierbare Blasgaszuführung werden üblicherweise pneumatische Stelleinrichtungen oder Kurvensteuerungen verwendet. Die positionierbare Blasgaszuführung wird hierbei gegen den aufzublasenden Vorformling beziehungsweise gegen einen Kontaktbereich der Blasformen geführt und derart gegenüber dem jeweiligen Kontaktbereich verspannt, dass eine ausreichende Druckdichtigkeit bereitgestellt ist, um den Blasdruck durch Zufuhr des Blasgases aufzubauen. Eine Anordnung der Blasstationen hat derart zu erfolgen, dass sowohl ein ausreichender Bauraum für den Reckstangenantrieb als auch für den Antrieb der positionierbaren Blasgaszuführung bereitgestellt wird.

Die zu positionierende Blasgaszuführung in Form einer sogenannten Blasdüse und die linear zu verfahrende Vorrichtung in Form einer Reckstange müssen also relativ zum Vorformling bewegt werden. In beiden Fällen ist nach der radialen Vorpositionierung ein jeweils linearer Verfahrweg in Axialrichtung des Vorformlings zu realisieren.

Die DE 10 2007 008 023 A1 schlägt zur Realisierung eines linearen Verfahrweges der Reckstange vor, dass die Drehbewegung einer Motorwelle eines Servomotors durch eine mechanische Kopplungseinrichtung in eine Hubbewegung der Reckstange transformiert wird. In der DE 10 2009 006 508 A1 wird eine Verfahren und Vorrichtung zur Blasformung von Behältern offenbart. Ein Vorformling aus einem thermoplastischen Material wird nach einer thermischen Konditionierung innerhalb einer Blasform von einer Reckstange gereckt und durch Blasdruckeinwirkung in den Behälter umgeformt. Eine Vorgabe der Positionierung der Reckstange erfolgt unter Verwendung eines Reckstangenantriebes. Der Blasdruck wird unter Verwendung mindestens einer positionierbaren Blasgaszuführung erzeugt.

Der Reckstangenantrieb ist , mechanisch mindestens zeitweise mit der positionierbaren Blasgaszuführung derart gekoppelt, dass eine gemeinsame Bewegung durchgeführt wird.

Somit ist es im Stand der Technik bekannt, dass die linearen Bewegungen der Blasdüse und der Reckstange miteinander gekoppelt werden.

Die DE 10 2007 009 026 A1 zeigt eine Vorrichtung zur Blasformung. Realisiert ist danach ein Dichtelement im Bereich der Blaseinrichtung, das gegen einen Stützring des Vorformlings geführt wird und bei der das Dichtelement nach einem Kontakt mit dem Stützring zunächst mechanisch gegenüber dem Stützring vorgespannt und anschließend pneumatisch weitergespannt wird.

Das Dichtelement zur Abdichtung des Vorformlings erstreckt sich im Bereich eines einen Mündungsabschnitt des Vorformlings umgebenden Ausgleichsraumes ausgehend von einem Anschlag eines Anschlusselementes in Richtung auf eine Einführöffnung des Anschlusselementes und weist mindestens einen Wölbungsbereich auf, der sich in eine einer Stützfläche des Anschlusselementes entgegengesetzte Richtung erstreckt.

Durch die unter Verwendung des Dichtelementes erfolgende Abdichtung einer Umgebung des Mündungsabschnittes des Vorformlings ist es möglich, außerhalb des Mündungsabschnittes einen Druck aufzubauen, der einer Verformung des Mündungsabschnittes bei der blastechnischen Verformung entgegenwirkt. Dies wird realisiert durch den am Mündungsabschnitt des Vorformlings allseitig anliegenden, gleichen Druck.

Die mechanische Vorspannung des Dichtelementes stellt eine ausreichende Dichtigkeit bereit, um in einem zweiten Verfahrensschritt eine pneumatische Weiterspannung der Dichtung zu ermöglichen. Das pneumatische Verspannen ermöglicht es insbesondere, mit zunehmendem abzudichtendem Druck auch die abdichtende Verspannung des Dichtelementes zu erhöhen.

Um die mechanische Vorspannung des Dichtelementes durch das lineare Verfahren der Blasdüse zu erreichen, muss eine exakte lineare Positionierung erfolgen. Nach der linearen Positionierung der Blasdüse und der pneumatischen Weiterspannung der Dichtung muss die Reckstange linear bewegt werden. Diese linearen Bewegungen müssen aufeinander abgestimmt sein.

Ein weiterer Nachteil in den technischen Lösungen gemäß dem Stand der Technik ist darin zu sehen, dass die Verfahrwege von Blasdüse und Reckstange häufig durch unabhängig voneinander arbeitende Antriebe realisiert werden. Dies ist insbesondere hinsichtlich der Kosten und des Gewichtes der Blasstationen nachteilig.

Im Stand der Technik finden sich nur technische Lösungen, bei denen die Kraftachsen beziehungsweise die Achsen der linearen Bewegungen nicht deckungsgleich sind. Infolge dessen entstehen bezüglich der Linearführungen durch die sich ergebenden Hebelarme Momentenbelastungen auf die Führungen. Die Folge dieser zusätzlichen Belastungen ist, dass die Führungen entsprechend ausgelegt werden müssen. Sowohl was die Dimensionierung als auch die häufig erforderliche Schmierung betrifft sind Kosten und Gewicht nachteilige Folgen.

Es ist somit Aufgabe der vorliegenden Erfindung, sowohl die Blasdüse als auch die Reckstange innerhalb einer Blasstation derart linear zu bewegen, dass durch eine geeignete Bewegungskinematik die Blasformung der Behälter unterstützt, gleichzeitig die Einleitung von Kräften in die Linearführungen reduziert und dadurch eine kostengünstige Leichtbauweise gefördert wird.

Diese Aufgabe wird erfindungsgemäß dadurch gelöst, dass eine Antriebsbewegungslinie einer in die Vorrichtung einzuleitenden linearen Antriebsbewegung und die Bewegungsachsen der Blasdüse und der Reckstange parallel verlaufen und in einer Raumrichtung im Wesentlichen deckungsgleich zusammenliegen, sodass eine gemeinsame Raumachse gebildet ist.

Hierdurch wird erreicht, dass nach einer ersten Startpositionierung der Blasstation relativ zum Vorformling zunächst die mechanische Vorspannung des Dichtelementes zwischen Blasdüsenmündung und Stützring des Vorformlings und nach der pneumatischen Weiterspannung die Behälterbildung die Linearbewegung der Reckstange zusammen mit dem Blasdruck vorgenommen wird.

Um die Leichtbauweise der Linearführungen ohne Schmierung zu unterstützen, ist insbesondere vorgesehen, die Kopplungsmittel derart anzuordnen und die Linearbewegungsachsen beziehungsweise Linearkraftachsen des Linearantriebs, der Blasdüse sowie der Reckstange sowohl parallel auszurichten, als auch in einer Raumrichtung zusammenfallen zu lassen, sodass auf die Linearführungen keine oder nur reduzierte zusätzliche Momentenkräfte eingeleitet werden.

Eine Blasstation wird in der Regel unter anderem durch einen Steuerblock gebildet. An dem Steuerblock ist eine Vorrichtung integraler Bestandteil oder an diesem festgelegt. Die Vorrichtung ist derart ausgestaltet, das eine von einem Linearantrieb bereitgestellte Antriebslinearbewegung und -kraft in die Blasstation eingeleitet werden kann.

Erfindungsgemäß werden Bewegungskopplungen realisiert, die aufeinander abgestimmt lineare Bewegungen derart ermöglichen, dass zunächst die Blasdüse in die gewünschte Position verfahren wird und anschließend die Reckstange zum Zweck des Reckens des Behälters absolut oder zumindest wirksam linear verfahren wird.

Die sequenzielle, aufeinanderfolgende Bewegungskinematik ist insbesondere dann vorteilhaft, wenn die Blasdüse gegen einen Stützring abdichten soll. Bei einer Abdichtung gegen den Stützring müssen zum einen Beschädigungen des Stützringes des Vorformlings vermieden werden, darüber hinaus muss eine sichere Abdichtung auch bei einem Auftreten von Fertigungstoleranzen sowie unter Berücksichtigung von Alterungserscheinungen der verwendeten Bauelemente und von temperaturbedingten Materialausdehnungen gewährleistet sein.

In einer bevorzugten Ausgestaltung der Erfindung wird ein Antrieb verwendet, der für alle zu realisierenden Linearbewegungen innerhalb der Blasstation eingesetzt wird. Der Antrieb kann nach jedem bekannten physikalischen beziehungsweise technischen Prinzip arbeiten, zum Beispiel Linearmotore, rotatorisch arbeitende Motore wie elektrische oder fluidische Antriebe in Verbindung mit geeigneten Getrieben wie Hypozykloiden- oder Cartwrightgeradführungen oder hydraulische Direktantriebe.

Auch denkbar sind Pneumatikantriebe, diese sind infolge des kompressiblen Mediums aber nur mit hohem Aufwand exakt positionierungssteuerbar und deshalb häufig weniger gut geeignet.

Zwischen dem Linearantrieb und den Kopplungsmitteln kann durch geeignete Trennmittel eine Trennebene vorgesehen sein, um z.B. Mittenversatz oder Achsenungenauigkeiten der jeweiligen Verfahrwege von Linearantrieb und den Kopplungsmitteln beziehungsweise der Bewegungsachsen der Blasdüse und Reckstange auszugleichen.

Bewährt haben sich für diese Zwecke Rundklinkenzüge, die als normierte Standartbauteile verfügbar sind. Die Kopplungsmittel können durch Kniehebel und Kopplungsstangen oder durch Kombination von fluidisch miteinander kommunizierenden Druckzylindern gebildet werden, die zusammen mit entsprechenden Verbindungselementen und Kopplungshaltern die erforderlichen Bewegungskinematiken der Blasdüse für die mechanische Vorspannung des Dichtelementes und die Reckung des Vorformlinges durch die Reckstange initiieren.

Für die Aufnahme von Kräften erweist es sich als besonders vorteilhaft, dass die Bewegungsachsen in einer symmetrischen Mittenlage der Vorrichtung angeordnet sind, sodass eine relativ zur Vorrichtung liegende symmetrische gemeinsame Raumachse bildbar ist.

Eine hohe Belastbarkeit wird dadurch unterstützt, dass die Kopplungsmittel durch mechanische Mittel, bestehend im Wesentlichen aus einem Mitnehmer wenigstens einem Kniehebel und wenigstens einer Koppelstange, gebildet sind.

Eine querkraftarme Krafteinleitung wird insbesondere dadurch unterstützt, dass die mechanischen Kopplungsmittel symmetrisch innerhalb der Vorrichtung angeordnet sind, sodass die resultierende Kraftwirkungslinie mit der Bewegungsachse der Reckstange weitgehend deckungsgleich ist.

Besonders bevorzugt ist es des Weiteren, dass der Kniehebel und die Koppelstange derart ausgebildet und angeordnet sind, dass die Reaktionskräfte der Blasdüse bezüglich der gemeinsamen Raumachse im Wesentlichen querkraft- und momentenfrei durch die Vorrichtung aufnehmbar sind.

Eine definierte Positionierbarkeit wird dadurch unterstützt, dass der wenigstens eine Kniehebel in seiner Verriegelungsstellung an einem Anschlag anliegt und mit Haltemagneten zusammenwirkt, sodass er in Verriegelungsstellung festlegbar ist.

Ein reproduzierbarer Bewegungsablauf wird dadurch unterstützt, dass der wenigstens eine Kniehebel in seiner Verriegelungsstellung durch einen Endschalter überwachbar ist.

Eine unbeabsichtigte Verstellung wird dadurch vermieden, dass der wenigstens eine Kniehebel in oder nahe des Totpunktes in der Verriegelungsstellung angeordnet ist.

Gemäß einer Ausführungsvariante ist daran gedacht, dass die Kopplungsmittel durch fluidische Mittel, bestehend im Wesentlichen aus wenigstens einem Mitnehmerzylinder und wenigstens einem Blasdüsenzylinder , gebildet sind.

Eine weitere Optimierung kann dadurch erfolgen, dass der wenigstens eine Blasdüsenzylinder derart ausgelegt und angeordnet ist, dass die resultierende Kraftwirkungslinie mit der Bewegungsachse der Reckstange weitgehend deckungsgleich ist.

Eine Anpassbarkeit an Steuerungsvorgaben wird dadurch erreicht, dass die fluidischen Kopplungsmittel weiterhin wenigstens eine Steuereinheit zur Steuerung der Fluidströmung zwischen Mitnehmerzylinder und Blasdüsenzylinder umfasst und dass das Fluid durch Ventile und Leitungen geleitet ist.

Gemäß einer weiteren Ausführungsvariante ist daran gedacht, dass der Mitnehmerzylinder mit dessen Zylinderstange endseitig derart in Kurvennuten des Mitnehmers geführt ist, sodass bei einem lineare Verfahrweg des Mitnehmers in Richtung der Blasdüse das kolbenseitige Fluidvolumen des Mitnehmerzylinders über Leitungen in ein kolbenseitiges Fluidvolumen des Blasdüsenzylinders hinein verdrängbar ist.

Eine konstruktive Weiterbildung besteht darin, dass ein Koppelhalter zwischen der Blasdüse und den Kopplungsmitteln angeordnet ist.

Insbesondere ist es möglich, dass der Koppelhalter und der Mitnehmer an einer Reckschlittenführung geführt sind.

Ein wartungsarmer Betrieb wird dadurch unterstützt, dass die Reckschlittenführung eine schmierungsfreie Gleitführung ist.

Zur Bereitstellung von Antriebsenergie ist daran gedacht, dass die einzuleitende lineare Antriebsbewegung durch einen Linearantrieb und/oder ein Koppelgehäuse realisiert ist.

Insbesondere ist vorgesehen, dass die einzuleitende lineare Antriebsbewegung durch ein Koppelgetriebe realisiert ist.

Ein kompakter Aufbau und ein zuverlässiger Betrieb werden dadurch unterstützt, dass das Koppelgetriebe von einem rotatorisch arbeitenden Antriebsmotor antreibbar ist und die lineare Antriebsbewegung durch eine Schubstange in die Vorrichtung einleitet.

Gemäß einer besonderen Ausführungsform ist vorgesehen, dass das Koppelgetriebe durch eine Hypozykloiden-Geradführung realisiert ist.

Gemäß einer anderen Ausführungsform ist vorgesehen, dass das Koppelgetriebe durch eine Cartwright-Geradführung realisiert ist.

Eine weitere Realisierungsvariante besteht darin, dass ein Trennmittel wenigstens eine Trennebene zwischen den Kopplungsmitteln und dem Linearantrieb bildet.

Eine Realisierung ist auch derart möglich, dass das Trennmittel durch einen Rundklinkenzug gebildet ist.

In den Zeichnungen sind erfindungsgemäße Ausführungsbeispiele schematisch dargestellt. Es zeigen:

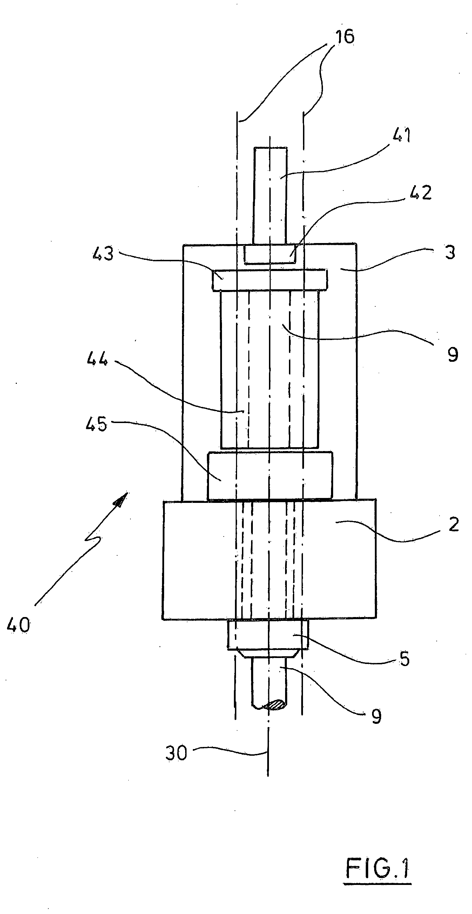

- Fig. 1: eine schematische, abstrahierte Darstellung einer Blasstation mit der Vorrichtung zur Blasformung von Behältern aus Vorformlingen, festgelegt an einem Ventilblock und mit einem Antrieb zur Erzeugung einer Linearbewegung beziehungsweise Linearkraft, welche durch Kopplungsmittel jeweils die Reckstange und die Blasdüse koppelt,

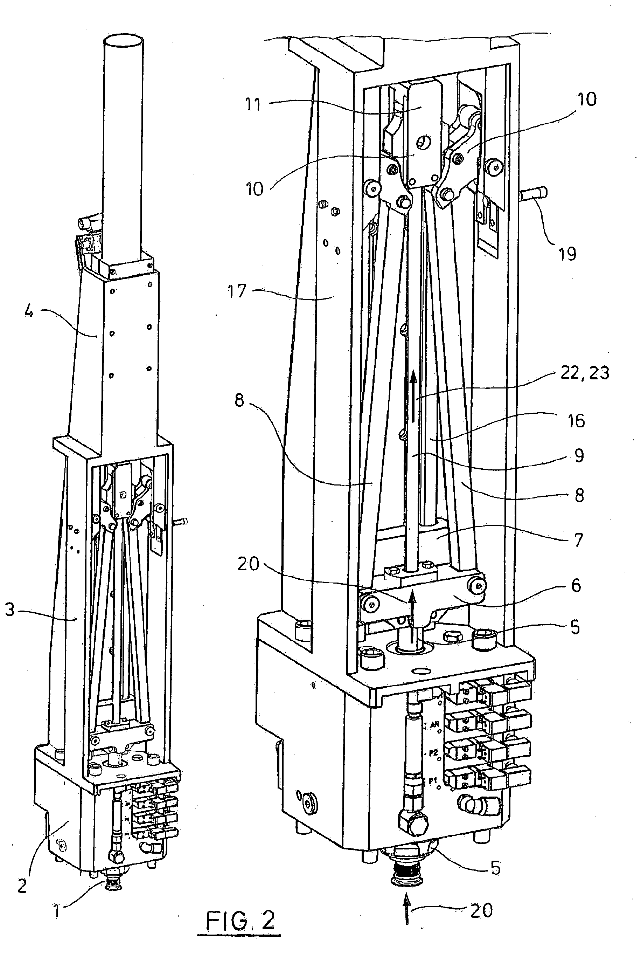

- Fig. 2: eine perspektivische Darstellung einer Blasstation mit der Vorrichtung zur Blasformung von Behältern aus Vorformlingen, festgelegt an einem Ventilblock, in einer ersten bevorzugten Ausführungsform mit Kopplungsmitteln in Form von Kniehebeln und Koppelstangen in der Situation vor dem Linearverfahrweg der Blasdüse und der Reckstange,

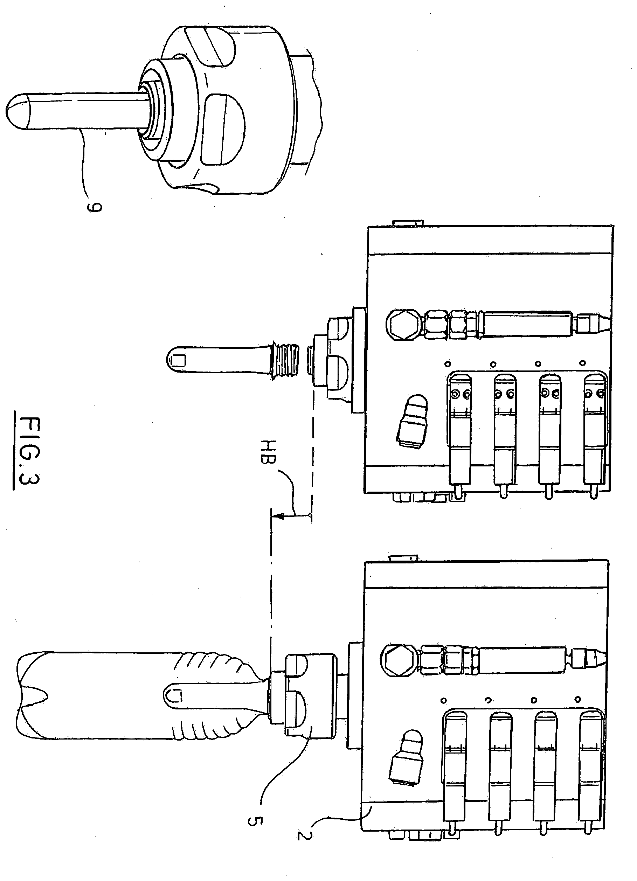

- Fig. 3: eine perspektivische Darstellung der Blasdüse mit Reckstange ,welche sich über die Blasdüsenmündung hinaus erstreckt (linke Abbildung), den Steuerblock mit Blasdüse in einer Position, vor dem Blasprozess (mittlere Abbildung), den Steuerblock mit Blasdüse in einer Position, nachdem die Blasdüse um den Verfahrweg "Hub Blasdüse" HB verfahren wurde und die mechanische Vorspannung des Dichtelementes gegen den Stützring des Vorformlings realisiert hat, wobei zu Illustrationszwecken sowohl der Vorformling als auch der Behälter dargestellt sind (rechte Abbildung),

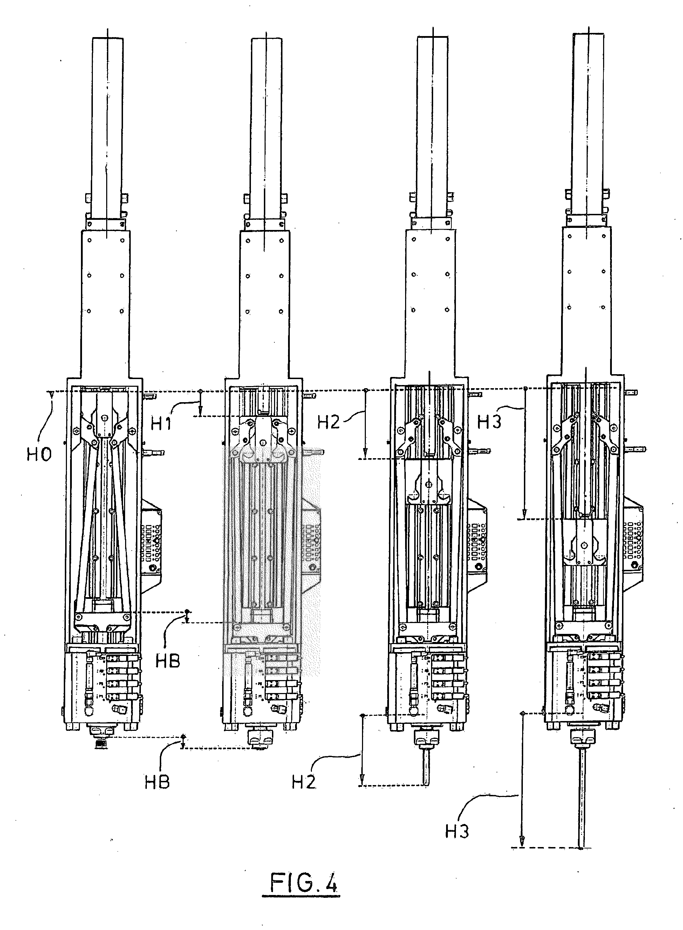

- Fig. 4: die Blasstation in verschiedenen Zeitstufen während des Blasprozesses von links nach rechts,

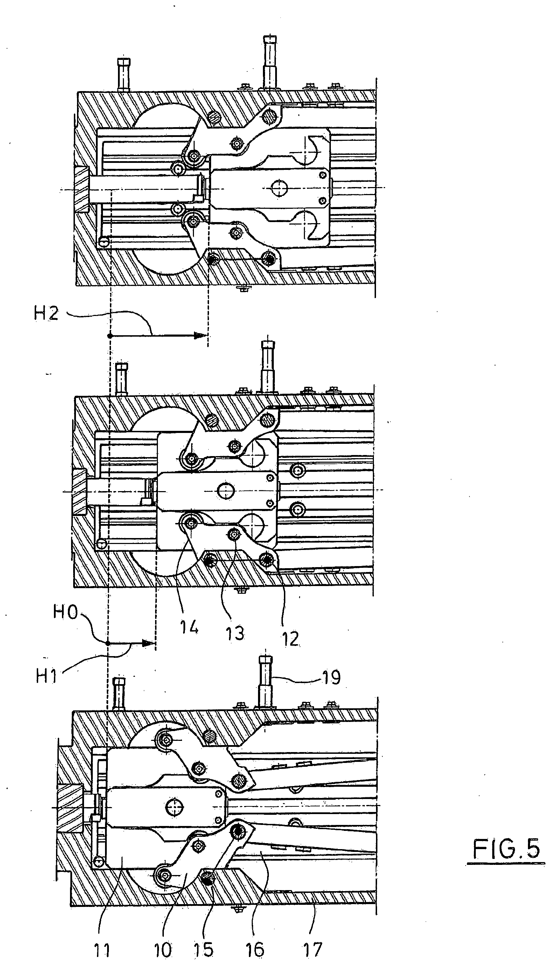

- Fig. 5: die Detaildarstellung des Mitnehmers und der Kopplungsmittel für die Blasdüse einer ersten bevorzugten Ausführungsform in verschiedenen Zeitstufen während des Blasprozesses von links nach rechts,

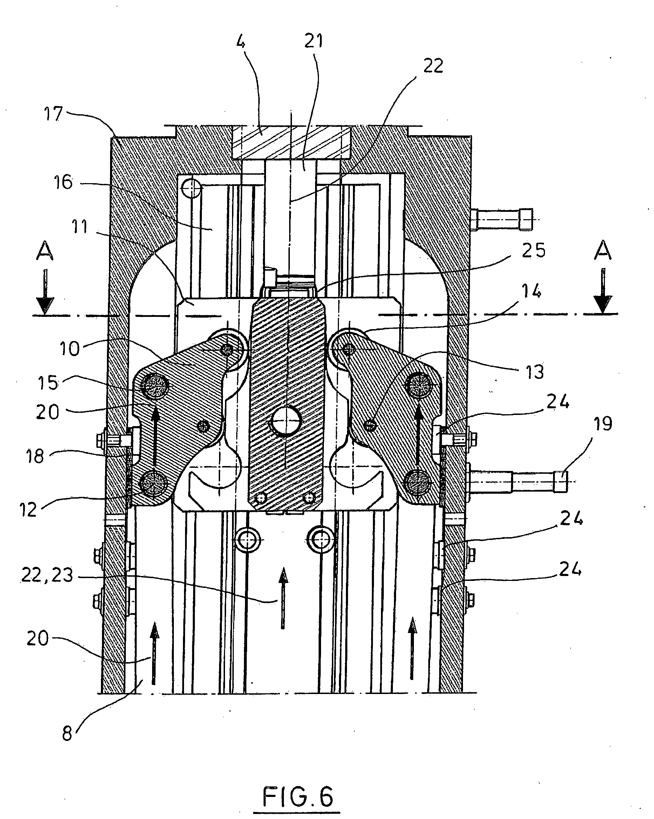

- Fig. 6: die Detail-Schnittdarstellung der Kniehebelverrie-gelung als erste bevorzugte Ausführungsform der Kopplungsmittel,

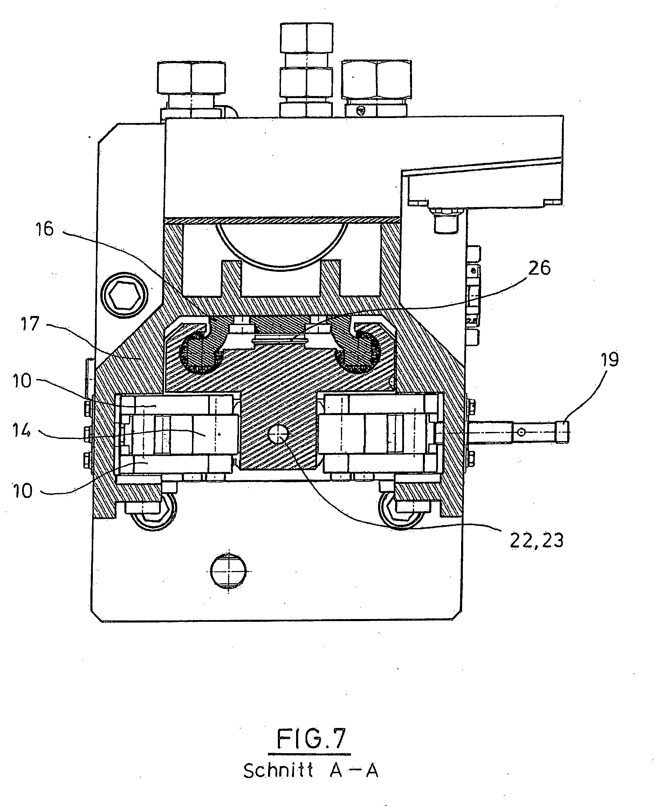

- Fig. 7: die Detail-Schnittdarstellung A-A von Fig. 6 mit Reckschlittenführung,

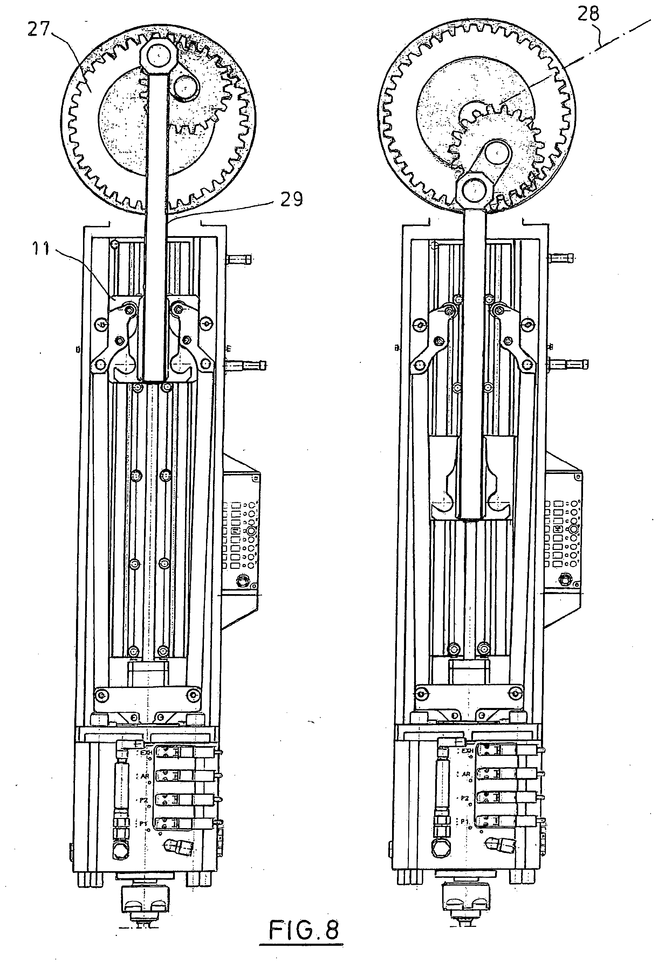

- Fig. 8: eine Darstellung der Blasstation mit der Vorrichtung zur Blasformung von Behältern aus Vorformlingen, festgelegt an einem Ventilblock, in einer weiteren bevorzugten Ausführungsform mit Kopplungsmitteln in Form von Kniehebeln und Koppelstangen in der Situation vor (linke Abbildung) und nach (rechte Abbildung) dem Linearverfahrweg der Blasdüse und Reckstange, wobei eine Hypozykloiden-Geradführung einem rotatorisch antreibenden Motor und der Blasstation zwischengeschaltet ist,

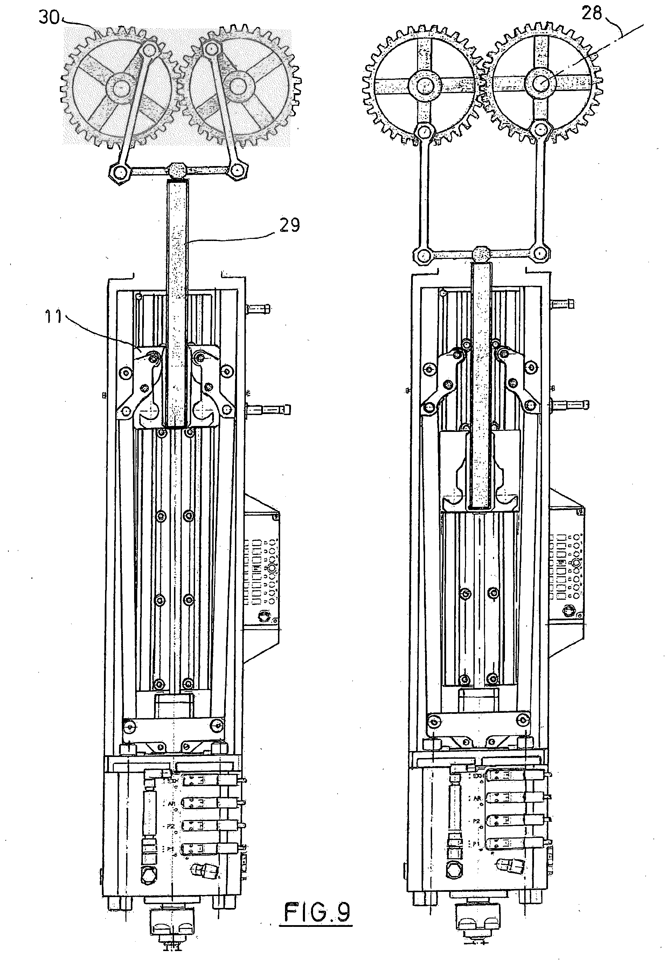

- Fig. 9: eine Darstellung der Blasstation mit der Vorrichtung zur Blasformung von Behältern aus Vorformlingen ,festgelegt an einem Ventilblock, in einer weiteren bevorzugten Ausführungsform mit Kopplungsmitteln in Form von Kniehebeln und Koppelstangen in der Situation nach dem linearen Verfahren der Blasdüse für die mechanische Vorspannung des Dichtelementes gegenüber dem Stützring des Vorformlings (linke Abbildung) und einer teilweisen Linearbewegung der Reckstange (rechte Abbildung), wobei ein Koppelgetriebe in Form einer Cartwright-Geradführung einem rotatorisch antreibenden Motor und der Blasstation zwischengeschaltet ist und

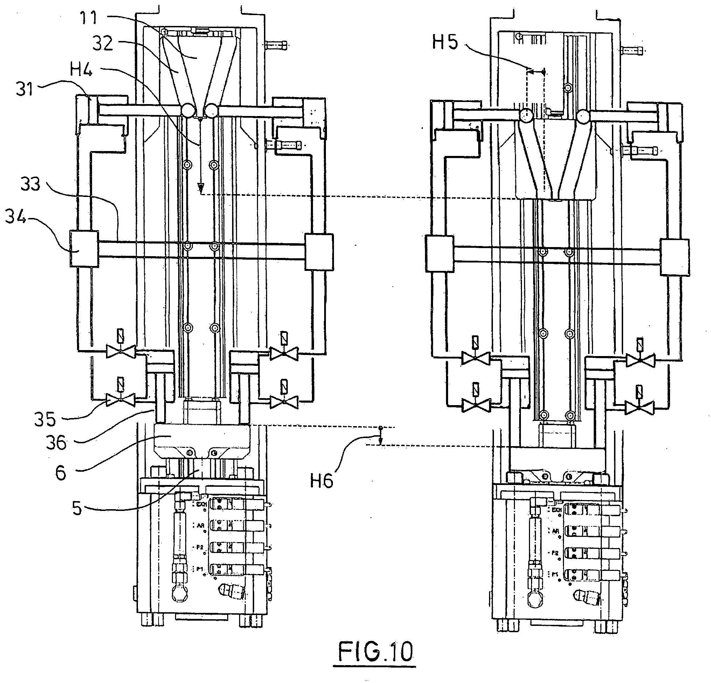

- Fig. 10: eine Darstellung der Blasstation mit der Vorrichtung zur Blasformung von Behältern aus Vorformlingen, festgelegt an einem Ventilblock, in einer weiteren bevorzugten Ausführungsform mit Kopplungsmitteln realisiert durch fluidische, hier hydraulische Kopplung mittels Blasdüsen- und Mitnehmerzylindern in der Situation vor (linke Abbildung) und nach (rechte Abbildung) dem Linearverfahrweg der Blasdüse und Reckstange, wobei jeder zuvor aufgezeigte Linearantrieb einsetzbar ist.

Fig. 1 zeigt eine schematische, abstrahierte Darstellung einer Blasstation (40) mit der Vorrichtung (3) zur Blasformung von Behältern aus Vorformlingen. Die Vorformlinge sind festgelegt an einem Ventilblock (2). Ein Antrieb (41) dient zur Erzeugung einer Linearbewegung beziehungsweise Linearkraft, welche durch Kopplungsmittel (44, 45) übertragen wird die jeweils die Reckstange (9) und die Blasdüse (5) koppeln. Schematisch dargestellt ist weiterhin die Linearführung (16) zur Führung der Kopplungsmittel (44, 45), die Reckstange (9) und die Blasdüse (5). Die erfindungsgemäße technische Lehre erkennt, dass es zur Erzielung einer möglichst leichten Linearführung ohne Schmierung vorteilhaft ist, die Kopplungsmittel (44, 45) symmetrisch bezüglich einer Raumachse (30) anzuordnen und gleichzeitig auch die Linearbewegungsachsen beziehungsweise -kraftachsen (22, 23) des Linearantriebs (41), der Blasdüse (5) sowie der Reckstange (9) sowohl parallel dazu auszurichten, als auch in einer Raumrichtung zusammenfallen zu lassen, sodass in die Linearführungen (16) nur reduzierte zusätzliche Momentenkräfte eingeleitet werden. Die Prinzipabbildung der Blasstation (40) zeigt die symmetrische Konstruktion auf.

Fig. 2 zeigt die perspektivische Darstellung einer Blasstation (40) mit der Vorrichtung (3) zur Blasformung von Behältern aus Vorformlingen festgelegt, an einem Ventilblock (2), in einer ersten bevorzugten Ausführungsform mit Kopplungsmitteln (44) in Form von Kniehebeln (10) und Koppelstangen (8) in der Situation vor dem Linearverfahrweg der Blasdüse (5) und der Reckstange (9).

Der Antrieb (41) zur Erzeugung einer Linearbewegung beziehungsweise -kraft ist in dem in Fig. 2 dargestellten Ausführungsbeispiel durch einen Linearmotor (4) realisiert, der an der Vorrichtung (3) und über die Ständer der Vorrichtung (17) an dem Ventilblock (2) festgelegt ist. Die Vorrichtungsständer (17) nehmen die linearen Reaktionskräfte der Blasdüse (5) und Reckstange (9) bei deren linearen Verfahrwegen auf und sind bezüglich der gemeinsamen Raumachse (30) symmetrisch ausgebildet, sodass keine reaktiven Momentenbelastungen in die Konstruktion eingeleitet werden.

Ein weiterer erfindungsgemäßer Vorteil besteht darin, dass ein bei der Durchführung des Blasvorganges auftretender Rückschlag momentenfrei abgeleitet und über Kniehebel an der Konstruktion abgestützt wird.

Ein aufgrund der Massenträgheit auftretendes leichtes Verkippen wird erfindungsgemäß ebenfalls toleriert und gegebenenfalls auftretende Kräfte und Momente werden aufgenommen.

Die symmetrisch angeordneten Kniehebel (10) werden durch den linear verfahrbaren Mitnehmer (11) derart ausgelenkt, dass die an den Kniehebeln (10) beweglich festgelegten Koppelstangen (8) infolge des linearen Bewegungsanteils der gemeinsamen Kreisbogenbahn des Koppelpunktes von Kniehebeln (10) und Koppelstangen (8) einer Schubstange gleich dem am gegenüberliegenden Ende der Koppelstangen (8) beweglich festgelegten Koppelhalter (6) eine lineare Bewegung in Richtung des Ventilblocks (2) einprägen.

Die mit dem Koppelhalter (6) formschlüssig verbundene Blasdüse (5) wird ebenfalls linear verfahren und realisiert dadurch die mechanische Vorspannung des mündungsseitigen Dichtelementes der Blasdüse (5) gegenüber des Stützringes des Vorformlings.

Fig. 3 zeigt in der linken Abbildung eine perspektivische Darstellung der Blasdüse (5) mit Reckstange (9), welche sich über die Blasdüsenmündung hinaus erstreckt. Die mittlere Abbildung zeigt den Steuerblock (2) mit Blasdüse (5) in einer Position vor dem Blasprozess, d.h. in einer Positionierung konzentrisch und oberhalb des gewindeseitigen Endes eines Vorformlings.

Die rechte Abbildung zeigt die Blasposition. Der Steuerblock (2) mit Blasdüse (5) wurde gegenüber der mittleren Darstellung um den Verfahrweg HB, d.h. dem Hub der Blasdüse, verfahren. Dadurch wird die mechanische Vorspannung des Dichtelementes gegen den Stützring des Vorformlings realisiert.

Fig. 4 zeigt die Blasstation (40), wie in Fig. 2 dargestellt, in verschiedenen Zeitstufen während des Blasprozesses. Die infolge der Kopplungsmittel (8, 10) ermöglichten Bewegungskinematiken werden als Hübe der einzelnen Komponenten nachfolgend erläutert. Der hier exemplarisch als elektrischer Linearmotor gezeigte Linearantrieb (4) induziert sowohl in den Mitnehmer (11) als auch in die Reckstange (9) eine lineare Abwärtsbewegung.

Bevorzugt werden Mitnehmer (11) und Reckstange (9) form- oder kraftschlüssig verbunden, sodass die induzierte Linearbewegung beide gleichermaßen treibt. In der Stellung H0 befindet sich der Mitnehmer (11) an seiner oberen Position innerhalb der Vorrichtung (3). Nach einem Verfahrweg H1 hat der Mitnehmer (11) die Kniehebel (10) ausgelenkt und infolge der Bewegungskopplung durch die symmetrischen Koppelstangen (8) mit dem Koppelhalter (6) wird die Blasdüse (5) um den "Hub Blasdüse" HB in die Blasposition verfahren. Gleichzeitig wird die Reckstange (9) um den Hub H1 (HB ungleich H1) verfahren, ist jedoch relativ zur Blasdüse (5) derart angeordnet, dass die Reckstange (9) endseitig nach dem Verfahrweg H1 noch nicht aus der Blasdüsenmündung (5) austritt.

Nach einem Verfahrweg H2 nimmt der Mitnehmer (11) eine Position unterhalb der Kniehebel (10) ein. Die Reckstange (9) wird gleichfalls um den Hub H2 verfahren, die Reckstangenspitze ragt je nach der relativen Lage vor dem Verfahrweg um den Betrag H2-H1-x über die Mündung der Blasdüse (5) vor.

Nach einem Verfahrweg H3 ist die maximal erforderliche lineare Auslenkung der Reckstange (9) erreicht, die von der zu realisierenden Behälterhöhe abhängig ist. Der lineare Auslenkungshub H3 bedeutet für die Reckstange (9) und den Mitnehmer (11) die Endposition, der Behälter ist in dieser Position sowohl abschließend gereckt als auch geblasen.

Fig. 5a bis Fig. 5c illustrieren durch drei Abbildungen die Funktionsweise und das Zusammenwirken von Mitnehmer (11) und Kniehebeln (10). In der Stellung H0 ist der Mitnehmer (11) an seiner oberen Position innerhalb der Vorrichtung (3) angelangt. Nach einem Verfahrweg H1 hat der Mitnehmer (11) die Kniehebel (10) über die Stützrollen (13) ausgelenkt und verriegelt. Die Verriegelung, d.h. die Verharrung in der ausgelenkten Position, erfolgt dadurch, dass die Koppelstangen (8) derart mit den Kniehebeln in einem Kopplungspunkt (12) gekoppelt sind, dass in der ausgelenkten Kniehebelposition bis zum oder über den Totpunkt hinweg verfahren wurde.

Als Totpunkt ist die relative Lage des Kopplungspunktes (12) zum Drehpunkt (15) des Kniehebels (10) definiert, indem die an dem Kniehebel angreifenden Kraftvektoren derart ausgebildet sind, dass das resultierende Kräftedreieck in einer Raumlinie zusammenfällt und nur längs dieser wirkt. Der Mitnehmer (11) begrenzt aufgrund seiner linearen Stellung nach dem Verfahrweg H1 die Auslenkung der Kniehebel (10) auf die Totpunktstellung dadurch, dass Gegenrollen (14) der Kniehebel (10) längsseitig anliegen. Nach einem Verfahrweg H2 hat der Mitnehmer (11) die Kniehebel (10) freigegeben.

Fig. 6 zeigt in einer detaillierten Längsschnittdarstellung die Kopplung durch die Kniehebel (10). Über die Linearbewegungsachse (22) des Linearantriebs (41), hier in Form eines Linearmotors (4), wird in die Vorrichtung (3) und den Reckständern (17) der Blasstation (40) eine Linearbewegung und - kraft induziert. Die Kraft- und Bewegungsachsen (22, 23) des Linearmotors (4) und die Reckstange (9) haben eine identische, zentrische Lage. Gleiches gilt für die resultierende Kraftwirkungslinie der Koppelstangen (8) aufgrund deren symmetrischer und zentrischer Anordnung, welche die Blasdüsenkräfte (20) aufnehmen.

Durch den fehlenden Versatz sind Hebelarme praktisch nicht vorhanden, die einzelnen Kraftwirkungsrichtungen können somit keine nennenswerten Drehmomente beziehungsweise Kippmomente begründen. Um die Kniehebelendlage im oder nahe dem Totpunkt sicherzustellen, sind nur geringe Haltekräfte erforderlich.

Die erfindungsgemäß Lehre schlägt dazu Haltemagnete (24) vor, die an dem Ständer der Vorrichtung (17) festgelegt sind und sowohl mit den Kniehebeln (10) als auch mit den Koppelstangen (8) derart korrespondieren, dass die Totpunktlage beibehalten wird, solange auf das System keine die magnetischen Haltekräfte übersteigenden Kräfte wirken. Ein Endschalter (19) kann vorgesehen werden, um die Endlage zu überwachen.

Fig. 7 stellt den Schnitt A-A aus Fig. 6 dar und zeigt ein Beispiel der erfindungsgemäßen konstruktiven Gestaltung der Reckschlittenführung (16), die hier als rundförmige Gleitführung ausgebildet ist. Auf dem Mitnehmer (11) kann längsseitig zum Reckständer (17) ein Haltemagnet (26) vorgesehen werden. Auch aus dieser Schnittdarstellung ist ersichtlich, dass die Kraft- und Bewegungswirklinien (22, 23) parallel liegen und zentrisch sowie symmetrisch innerhalb der Vorrichtung (17) positioniert sind.

Fig. 8 zeigt die Darstellung der Blasstation (40) mit der Vorrichtung zur Blasformung von Behältern (3) aus Vorformlingen, festgelegt an einem Ventilblock (2), in einer weiteren bevorzugten Ausführungsform mit Kopplungsmitteln (44) in Form von Kniehebeln (11) und Koppelstangen (8) in der Situation vor (linke Abbildung) und nach (rechte Abbildung) dem Linearverfahrweg der Blasdüse (5) und der Reckstange (9), wobei eine Hypozykloiden-Geradführung (27) einem rotatorisch antreibenden Motor und der Blasstation (40) zwischen-geschaltet ist.

In dieser Ausführungsvariante wird also der zuvor beschriebene elektrische Linearmotor (4) als Linearantrieb ersetzt durch ein Hypozykloidengetriebe (27) und eine Schubstange (29). Das Getriebe wird rotatorisch, z.B. durch einen elektrischen Gleichstrom-Motor, Wechselstrom-Motor oder Servomotor (28)n angetrieben. Insbesondere durch die Verwendung einer Schubstange (29), ggf. kombiniert mit Trennmitteln (42)n ist eine hochgenaue Linearführung des Mitnehmers (11) nicht erforderlich, d.h. die zuvor beschriebene Reckschlittenführung (16) kann in dieser Variante entfallen.

Fig. 9 zeigt die Darstellung der Blasstation (40) mit der Vorrichtung zur Blasformung von Behältern (3) aus Vorformlingen, festgelegt an einem Ventilblock (2), in einer weiteren bevorzugten Ausführungsform mit Kopplungsmitteln (44) in Form von Kniehebeln (11) und Koppelstangen (8) in der Situation nach dem linearen Verfahren der Blasdüse (5) für die mechanische Vorspannung des Dichtelementes gegenüber dem Stützring des Vorformlings (linke Abbildung) und einer teilweisen Linearbewegung der Reckstange (9) (rechte Abbildung), wobei ein Koppelgetriebe in Form einer Cartwright-Geradführung (30) einem rotatorisch antreibenden Motor (28) und der Blasstation (40) zwischengeschaltet ist.

In dieser Ausführungsvariante wird also der zuvor beschriebene elektrische Linearmotor (4) als Linearantrieb ersetzt durch eine Cartwright-Geradführung (30) und eine Schubstange (29). Das Getriebe wird rotatorisch, zum Beispiel durch einen elektrischen Gleichstrom-Motor, Wechselstrom-Motor oder Servomotor (28), angetrieben. Insbesondere durch die Verwendung einer Schubstange (29), ggf. kombiniert mit Trennmitteln (42), ist eine hochgenaue Linearführung des Mitnehmers (11) nicht erforderlich, d.h. die zuvor beschriebene Reckschlittenführung (16) kann in dieser Variante entfallen.

Fig. 10 zeigt eine Darstellung der Blasstation (40) mit der Vorrichtung zur Blasformung von Behältern (3) aus Vorformlingen, festgelegt an einem Ventilblock (2), in einer weiteren bevorzugten Ausführungsform mit Kopplungsmitteln (44), realisiert durch fluidische, hier hydraulische, Kopplung mittels Blasdüsen- und Mitnehmerzylindern (31, 36) in der Situation vor (linke Abbildung) und nach (rechte Abbildung) dem Linearverfahrweg der Blasdüse (5) und Reckstange, wobei jeder zuvor aufgezeigte Linearantrieb einsetzbar ist.

Bei diesen Kopplungsmitteln ist der Mitnehmer (11) mit Kurvennuten (32) ausgestattet, in die Mitnehmerzylinder (31) mit deren Zylinderstangen endseitig derart geführt sind, sodass bei einem linearen Verfahrweg des Mitnehmers (11) das kolbenseitige Fluidvolumen über Leitungen (33) und eine optionale Steuereinheit (34) sowie Ventile (35) in ein kolbenseitiges Fluidvolumen der Blasdüsenzylinder (36) hinein verdrängt wird.

Die Fluidvolumina der Zylinder (31, 36) und die Gestaltung der Kurvennuten (32) sind derart aufeinander abgestimmt, dass bei einem Mitnehmerhub H4 die Mitnehmerzylinder (31) zu einer Hubstrecke H5 angeregt werden und das dadurch aus dem Mitnehmerzylinder (31) verdrängte kolbenseitige Fluidvolumen in den Blasdüsenzylindern (36) den Hub H6 erzwingt.

Ansprechverhalten, Bewegungscharakteristik und Dämpfung können durch die Verwendung von Steuereinheiten (34) und/oder Ventilen (35) beeinflusst werden. Es ist aber auch denkbar, die Zylinder (31, 36) und die Leitungen (33) derart auszulegen, dass keine weiteren Bauteile erforderlich sind.

## Patentansprüche

1. Vorrichtung (3) zur Blasformung von Behältern aus einem thermoplastischen Material, aufweisend eine Reckstange (9) zur Reckung des Vorformlings (1), eine Blasdüse (5) zur Zufuhr eines Blasgases in den Vorformling und für den Aufbau des für die Vorformlingexpansion erforderlichen Blasdruckes, sowie Kopplungsmittel (44) für die Kopplung von Blasdüse (5) und Reckstange (9) zur Erzielung einer abgestimmten Bewegungskinematik, wobei eine Antriebsbewegungslinie (22) einer in die Vorrichtung (3) einzuleitenden linearen Antriebsbewegung und die Bewegungsachsen (23) der Blasdüse (5) und der Reckstange (9) parallel verlaufen und in einer Raumrichtung im Wesentlichen deckungsgleich zusammenliegen, sodass eine gemeinsame Raumachse (30) gebildet ist, **dadurch gekennzeichnet, dass** die Kopplungsmittel (44) durch mechanische Mittel, bestehend im Wesentlichen aus einem Mitnehmer (11), wenigstens einem Kniehebel (10) und wenigstens einer Koppelstange (8), gebildet sind.

2. Vorrichtung (3) zur Blasformung von Behältern aus einem thermoplastischen Material nach Anspruch 1, **dadurch gekennzeichnet, dass** die Bewegungsachsen (22, 23) in einer symmetrischen Mittenlage der Vorrichtung (3) angeordnet sind, sodass eine relativ zur Vorrichtung (3) liegende symmetrische gemeinsame Raumachse (30) bildbar ist.

3. Vorrichtung (3) zur Blasformung von Behältern aus einem thermoplastischen Material nach Anspruch 1, **dadurch gekennzeichnet, dass** die mechanischen Kopplungsmittel (8, 10, 11) symmetrisch innerhalb der Vorrichtung(3) angeordnet sind, sodass die resultierende Kraftwirkungslinie mit der Bewegungsachse (23) der Reckstange (9) weitgehend deckungsgleich ist.

4. Vorrichtung (3) zur Blasformung von Behältern aus einem thermoplastischen Material nach Anspruch 1, **dadurch gekennzeichnet, dass** der Kniehebel (10) und die Koppelstange (8) derart ausgebildet und angeordnet sind, dass die Reaktionskräfte (20) der Blasdüse (5) bezüglich der gemeinsamen Raumachse (30) im Wesentlichen querkraft- und momentenfrei durch die Vorrichtung (3) aufnehmbar sind.

5. Vorrichtung (3) zur Blasformung von Behältern aus einem thermoplastischen Material nach Anspruch 1, **dadurch gekennzeichnet, dass** der wenigstens eine Kniehebel (10) in seiner Verriegelungsstellung an einem Anschlag (18) anliegt und mit Haltemagneten (24) zusammenwirkt, sodass er in Verriegelungsstellung festlegbar ist.

6. Vorrichtung (3) zur Blasformung von Behältern aus einem thermoplastischen Material nach Anspruch 1, **dadurch gekennzeichnet, dass** der wenigstens eine Kniehebel (10) in seiner Verriegelungsstellung durch einen Endschalter (19) überwachbar ist.

7. Vorrichtung (3) zur Blasformung von Behältern aus einem thermoplastischen Material nach Anspruch 1, **dadurch gekennzeichnet, dass** der wenigstens eine Kniehebel (10) in oder nahe des Totpunktes in der Verriegelungsstellung angeordnet ist.

8. Vorrichtung (3) zur Blasformung von Behältern aus einem thermoplastischen Material nach Anspruch 1, **dadurch gekennzeichnet, dass** ein Koppelhalter (6) zwischen der Blasdüse (5) und den Kopplungsmitteln (44) angeordnet ist.

9. Vorrichtung (3) zur Blasformung von Behältern aus einem thermoplastischen Material nach Anspruch 8, **dadurch gekennzeichnet, dass** der Koppelhalter (6) und der Mitnehmer (11) an einer Reckschlittenführung (16) geführt sind.

10. Vorrichtung (3) zur Blasformung von Behältern aus einem thermoplastischen Material nach Anspruch 9, **dadurch gekennzeichnet, dass** die Reckschlittenführung (16) eine schmierungsfreie Gleitführung ist.

11. Vorrichtung (3) zur Blasformung von Behältern aus einem thermoplastischen Material nach Anspruch 1, **dadurch gekennzeichnet, dass** die einzuleitende lineare Antriebsbewegung (22) durch einen Linearantrieb (41) und/oder ein Koppelgetriebe realisiert ist.

12. Vorrichtung (3) zur Blasformung von Behältern aus einem thermoplastischen Material nach Anspruch 1, **dadurch gekennzeichnet, dass** die einzuleitende lineare Antriebsbewegung (22) durch ein Koppelgetriebe (27, 30) realisiert ist.

13. Vorrichtung (3) zur Blasformung von Behältern aus einem thermoplastischen Material nach Anspruch 12, **dadurch gekennzeichnet, dass** das Koppelgetriebe (27, 30) von einem rotatorisch arbeitenden Antriebsmotor (28) antreibbar ist und die lineare Antriebsbewegung (22) durch eine Schubstange (29) in die Vorrichtung (3) einleitet.

14. Vorrichtung (3) zur Blasformung von Behältern aus einem thermoplastischen Material nach Anspruch 12, **dadurch gekennzeichnet, dass** das Koppelgetriebe durch eine Hypozykloiden-Geradführung (27) realisiert ist.

15. Vorrichtung (3) zur Blasformung von Behältern aus einem thermoplastischen Material nach Anspruch 12, **dadurch gekennzeichnet, dass** das Koppelgetriebe durch eine Cartwright-Geradführung (30) realisiert ist.

16. Vorrichtung (3) zur Blasformung von Behältern aus einem thermoplastischen Material nach Anspruch 11 oder 12, **dadurch gekennzeichnet, dass** ein Trennmittel (42) wenigstens eine Trennebene zwischen den Kopplungsmitteln (44) und dem Linearantrieb (41) bildet.

17. Vorrichtung (3) zur Blasformung von Behältern aus einem thermoplastischen Material nach Anspruch 16, **dadurch gekennzeichnet, dass** das Trennmittel (42) durch einen Rundklinkenzug gebildet ist.

18. Blasstation (40) zur Blasformung von Behältern aus einem thermoplastischen Material aufweisend einen Steuerblock (2) sowie eine daran festgelegte Vorrichtung (3) zur Blasformung von Behältern nach einem der vorgehenden Ansprüche.

## Claims

1. Device (3) for the blow moulding of containers made of a thermoplastic material comprising a drawing bar (9) for stretching the preform (1), a blowing nozzle (5) for feeding a blowing gas into the preform and for the build-up of the blowing pressure required for the preform expansion, as well as coupling means (44) for coupling of the blow nozzle (5) and drawing bar (9) for achieving coordinated motion kinematics, wherein an actuator travel line (22) of a linear actuator movement to be introduced into the device (3) and the axes of motion (23) of the blowing nozzle (5) and the drawing bar (9) run in parallel and essentially lie congruently with one another in a spatial direction so that a common spatial axis (30) is formed, **characterized in that** the coupling means (44) are formed by mechanical means essentially consisting of a carrier (11), at least one toggle lever (10), and at least one coupling rod (8).

2. Device (3) for the blow moulding of containers made of a thermoplastic material according to Claim 1, **characterized in that** the axes of motion (22, 23) are arranged at a symmetrical centre position of the device (3) in such a way that a symmetrically common spatial axis (30) lying relative to the device (3) can be formed.

3. Device (3) for the blow moulding of containers made of a thermoplastic material according to Claim 1, **characterized in that** the mechanical coupling means (8, 10, 11) are symmetrically arranged within the device (3) in such a way that the resulting line of action of force is congruent with the axis of motion (23) of the drawing bar (9) to a great extent.

4. Device (3) for the blow moulding of containers made of a thermoplastic material according to Claim 1, **characterized in that** the toggle lever (10) and the coupling rod (8) are designed and arranged in such a way that the reaction forces (20) of the blowing nozzle (5) can be taken on by the device (3) in an essentially shear-force and torque-free manner with reference to the common spatial axis (30).

5. Device (3) for the blow moulding of containers made of thermoplastic material according to Claim 1, **characterized in that** the at least one toggle lever (10) rests on a stop (18) in its locked position and interacts with retention magnets (24) in such a way that it can be fixed in the locked position.

6. Device (3) for the blow moulding of containers made of thermoplastic material according to Claim 1, **characterized in that** the at least one toggle lever (10) can be monitored by a limit switch (19) in its locked position.

7. Device (3) for the blow moulding of containers made of thermoplastic material according to Claim 1, **characterized in that** the at least one toggle lever (10) is arranged in or near the dead centre in the locked position.

8. Device (3) for the blow moulding of containers made of a thermoplastic material according to Claim 1, **characterized in that** a coupling holder (6) is arranged between the blowing nozzle (5) and the coupling means (44) .

9. Device (3) for the blow moulding of containers made of a thermoplastic material according to Claim 8, **characterized in that** a coupling holder (6) and the carrier (11) are guided on a horizontal slide guide (16) .

10. Device (3) for the blow moulding of containers made of a thermoplastic material according to Claim 9, **characterized in that** the horizontal slide guide (16) is a lubrication-free slide guide.

11. Device (3) for the blow moulding of containers made of a thermoplastic material according to Claim 1, **characterized in that** the linear actuator movement (22) to be introduced is implemented by means of a linear actuator (41) and/or linkage.

12. Device (3) for the blow moulding of containers made of a thermoplastic material according to Claim 1, **characterized in that** the linear actuator movement (22) to be introduced is implemented by means of a linkage (27, 30).

13. Device (3) for the blow moulding of containers made of a thermoplastic material according to Claim 12, **characterized in that** the linkage (27, 30) can be propelled by means of a rotary operating drive motor (28) and introduces the linear actuator movement (22) into the device (3) via a thrust rod (29).

14. Device (3) for the blow moulding of containers made of a thermoplastic material according to Claim 12, **characterized in that** the linkage is implemented by means of a hypocycloid geared straight-line mechanism (27) .

15. Device (3) for the blow moulding of containers made of a thermoplastic material according to Claim 12, **characterized in that** the linkage is implemented by means of a Cartwright geared straight-line mechanism (30) .

16. Device (3) for the blow moulding of containers made of a thermoplastic material according to Claim 11 or 12, **characterized in that** a separating means (42) forms at least one separation plane between the coupling means (44) and the linear actuator (41).

17. Device (3) for the blow moulding of containers made of a thermoplastic material according to Claim 16, **characterized in that** the separating means (42) is formed by a round latch lock unit.

18. Blowing station (40) for the blow moulding of containers made of a thermoplastic material comprising a control block (2) as well as a device (3) fixed to it for blow moulding containers according to one of the preceding claims.

## Revendications

1. Dispositif (3) de moulage par soufflage de récipients en un matériau thermoplastique, présentant une barre d'étirage (9) pour l'étirage de la préforme (1), une buse de soufflage (5) pour l'adduction d'un gaz de soufflage dans la préforme et pour l'obtention de la pression de soufflage requise pour l'expansion de la préforme, ainsi que des moyens d'accouplement (44) pour l'accouplement de la buse de soufflage (5) et de la barre d'étirage (9) en vue d'assurer une synchronisation cinématique, une ligne de déplacement (22) d'un mouvement d'entraînement linéaire à induire dans le dispositif (3) et les axes de déplacement (23) de la buse de soufflage (5) et de la barre d'étirage (9) étant parallèles et essentiellement coïncidantes selon une direction spatiale de sorte à former un axe (30) dans l'espace commun, **caractérisé en ce que** les moyens d'accouplement (44) sont formés par des éléments mécaniques comprenant pour l'essentiel un entraîneur (11), au moins un levier coudé (10) et au moins une barre d'accouplement (8).

2. Dispositif (3) de moulage par soufflage de récipients en un matériau thermoplastique selon la revendication 1, **caractérisé en ce que** les axes de déplacement (22, 23) sont agencés en une position médiane symétrique dans le dispositif (3) de façon à pouvoir former, par rapport au dispositif (3), un axe dans l'espace commun (30) symétrique.

3. Dispositif (3) de moulage par soufflage de récipients en un matériau thermoplastique selon la revendication 1, **caractérisé en ce que** les moyens d'accouplement mécaniques (8, 10, 11) sont agencés symétriquement à l'intérieur du dispositif (3) de façon à ce que la ligne d'action des forces résultante coïncide en grande partie avec l'axe de déplacement (23) de la barre d'étirage (9).

4. Dispositif (3) de moulage par soufflage de récipients en un matériau thermoplastique selon la revendication 1, **caractérisé en ce que** le levier coudé (10) et la barre d'accouplement (8) sont formés et agencés de façon telle que les forces de réaction (20) de la buse de soufflage (5) peuvent être absorbées par le dispositif (3) essentiellement sans forces transversales et sans couple par rapport à l'axe commun (30) dans l'espace.

5. Dispositif (3) de moulage par soufflage de récipients en un matériau thermoplastique selon la revendication 1, **caractérisé en ce que** le (les) levier(s) coudé(s) (10) s'appuie(nt) contre une butée (18) lorsqu'il(s) est (sont) en position de verrouillage et concoure(nt) avec des aimants de retenue (24) de façon à ce qu'il soit possible de définir une position de verrouillage.

6. Dispositif (3) de moulage par soufflage de récipients en un matériau thermoplastique selon la revendication 1, **caractérisé en ce que** la position de verrouillage du (des) levier(s) coudé(s) (10) peut être surveillée par un interrupteur de fin de course (19).

7. Dispositif (3) de moulage par soufflage de récipients en un matériau thermoplastique selon la revendication 1, **caractérisé en ce que**, en position de verrouillage, le (les) levier(s) coudé(s) (10) est (sont) agencé(s) au ou à proximité du point mort.

8. Dispositif (3) de moulage par soufflage de récipients en un matériau thermoplastique selon la revendication 1, **caractérisé en ce qu'**une fixation d'accouplement (6) est agencée entre la buse de soufflage (5) et les moyens d'accouplement (44).

9. Dispositif (3) de moulage par soufflage de récipients en un matériau thermoplastique selon la revendication 8, **caractérisé en ce que** la fixation d'accouplement (6) et l'entraîneur (11) sont guidés par un guide du chariot d'étirage (16).

10. Dispositif (3) de moulage par soufflage de récipients en un matériau thermoplastique selon la revendication 9, **caractérisé en ce que** le guide du chariot d'étirage (16) est un coulisseau ne nécessitant pas de lubrification.

11. Dispositif (3) de moulage par soufflage de récipients en un matériau thermoplastique selon la revendication 1, **caractérisé en ce que** le mouvement d'entraînement linéaire (22) à induire est obtenu par un entraînement linéaire (41) et/ou une transmission par couplage

12. Dispositif (3) de moulage par soufflage de récipients en un matériau thermoplastique selon la revendication 1, **caractérisé en ce que** le mouvement d'entraînement linéaire (22) à induire est obtenu par une transmission par couplage (27, 30).

13. Dispositif (3) de moulage par soufflage de récipients en un matériau thermoplastique selon la revendication 12, **caractérisé en ce que** la transmission par couplage (27, 30) est entraînable par un moteur (28) opérant en rotation et qu'elle induit le mouvement d'entraînement linéaire (22) dans le dispositif (3) par une bielle (29).

14. Dispositif (3) de moulage par soufflage de récipients en un matériau thermoplastique selon la revendication 12, **caractérisé en ce que** la transmission par couplage est réalisée par un guidage droit hypocycloïde (27).

15. Dispositif (3) de moulage par soufflage de récipients en un matériau thermoplastique selon la revendication 12, **caractérisé en ce que** la transmission par couplage est réalisée par un guidage droit Cartwright (30).

16. Dispositif (3) de moulage par soufflage de récipients en un matériau thermoplastique selon la revendication 11 ou 12, **caractérisé en ce que** un moyen de séparation (42) forme au moins un plan de séparation entre les moyens d'accouplement (44) et l'entraînement linéaire (41).

17. Dispositif (3) de moulage par soufflage de récipients en un matériau thermoplastique selon la revendication 16, **caractérisé en ce que** le moyen de séparation (42) est formé par un loquet cylindrique.

18. Station de soufflage (40) pour le moulage par soufflage de récipients en un matériau thermoplastique, présentant un bloc de commande (2) ainsi que, fixé à celui-ci, un dispositif (3) de moulage par soufflage de récipients selon l'une des revendications précédentes.
